# EUROPÄISCHE PATENTSCHRIFT

(11) **EP 1 392 539 B1**
(45) Veröffentlichungstag und Bekanntmachung des Hinweises auf die Patenterteilung: **02.12.2009**
(21) Anmeldenummer: 02742937.2
(22) Anmeldetag: 03.05.2002
(51) Int. Cl.: B60J 7/057, F15B 15/28

(54) **SYSTEM ZUM ÖFFNEN UND SCHLIESSEN EINES FALTVERDECKES ODER BEWEGLICHEN FAHRZEUGDACHS BEI EINEM CABRIO-FAHRZEUG**
SYSTEM FOR OPENING AND CLOSING A FOLDING TOP OR DISPLACEABLE VEHICLE ROOF ON A CONVERTIBLE VEHICLE
SYSTEME DESTINE A L'OUVERTURE ET A LA FERMETURE D'UNE CAPOTE REPLIABLE OU D'UN TOIT MOBILE DANS UN VEHICULE CABRIOLET

(30) Priorität: 01.06.2001 DE 10126672; 18.01.2002 DE 10201871
(43) Veröffentlichungstag der Anmeldung: 03.03.2004
(73) Patentinhaber: Bayerische Motoren Werke Aktiengesellschaft, 80809 München (DE); Hoerbiger Hydraulik GmbH, 86956 Schongau (DE)
(72) Erfinder: DANGL, Wolfgang, 84048 Mainburg (DE); KLUGE, Reinhold, 85399 Hallbergmoos (DE); STOLLE, Klaus, 86972 Altenstadt (DE)
(86) Internationale Anmeldenummer: PCT/EP2002/004868
(87) Internationale Veröffentlichungsnummer: WO 2002/098692

(56) Entgegenhaltungen:
- EP-A- 0 550 952
- STAFF REPORT: "Position transducers provide system feedback" HYDRAULICS&PNEUMATICS, Nr. 2352, April 2000 (2000-04), XP000937261

## Beschreibung

Die Erfindung betrifft ein System zum Öffnen und Schließen eines Faltverdeckes oder beweglichen Fahrzeugdachs bei einem Cabrio-Fahrzeug gemäß dem Oberbegriff des Anspruchs 1.

Ein gattungsgemäßes System ist aus der US 5,225,747 bekannt. Bei diesem System wird eine Sensoranordnung bei einem Faltverdeck gewählt, mit welchem die Öffnungs- und/oder Schließbewegung des Faltverdeckes über zumindest einen bestimmten Bewegungsbereich erfasst werden kann. Das System umfasst dabei Antriebsmittel, die mit Teilen, beispielsweise Gestängeelementen, zum Öffnen und Schließen des Verdeckes verbunden sind. Überdies sind Positionssensoren in Form von Drehwinkelsensoren vorgesehen, die im Scharnierbereich des Gestänges angeordnet sind. Diese Positionsdrehsensoren erfassen die Bewegung des Faltverdeckes zumindest über einen Bewegungsbereich und geben ein entsprechendes Signal an eine Steuervorrichtung ab, die aufgrund der Eingangssignale den weiteren Betrieb des Verdecks bestimmt und kontrolliert.

Ausgehend von diesem Stand der Technik ist es Aufgabe der vorliegenden Erfindung, ein solches System derart weiterzubilden, dass die Positionssensoren an antriebsnahen Positionen angeordnet werden können.

Diese Aufgabe wird durch das im kennzeichnenden Teil des Anspruchs 1 genannten Merkmal gelöst.

Demgemäß wird zumindest ein Positionssensor als Linearsensor ausgebildet. Dieser Linearsensor ist so angeordnet, dass die Position zweier beweglicher Elemente des Faltverdecks oder beweglichen Fahrzeugdachs zueinander oder die Position eines beweglichen Elements des Faltverdecks oder beweglichen Fahrzeugdachs zu einem festen Bezugspunkt des Fahrzeugs erfassbar ist. Durch diese Ausbildung des Positionssensors ist es möglich, ihn nicht nur im Bereich eines Scharniers bei einem Element des Faltverdecks oder beweglichen Fahrzeugdachs anzuordnen, sondern in besonderer Weise in der Nähe eines Antriebs.

Gemäss einer besonderen Ausführungsform kann der Positionssensor dabei mit einem Antriebsmittel gekoppelt, insbesondere in diesem integriert sein. Diese Ausführungsform erweist sich insbesondere dann vorteilhaft, wenn das Antriebsmittel ebenfalls beim Öffnen und Schließen des Faltverdeckes oder beweglichen Fahrzeugdachs eine Linearbewegung ausführt, beispielsweise dann, wenn das Antriebsmittel eine Kolben-Zylinder-Anordnung (z.B. Hydraulikzylinder) umfasst, welche sich beim Betrieb des Faltverdeckes oder beweglichen Fahrzeugdachs hin- und herbewegt.

Die in besonderer Weise zu erfassenden Elemente des Faltverdeckes oder beweglichen Fahrzeugdachs sind dessen Hauptsäule sowie der Spannbügel. Aus diesem Grund wird gemäß einer vorzugsweisen Ausführungsform der Erfindung, der Sensor so angeordnet, dass die Lage der Position der Hauptsäule oder eines Spannbügels des Faltverdecks oder beweglichen Fahrzeugdachs zu einem festen Bezugspunkt des Fahrzeugs bzw. einem anderen Bezugspunkt des Faltverdeckes oder beweglichen Fahrzeugdachs ermittelbar ist.

Natürlich können zusätzlich zu einem Linearsensor auch noch andere Sensoren, wie die in der US 5,225,747 beschriebenen Drehwinkelsensoren oder Endlagenschalter, verwendet werden. Ausschlaggebend bei der vorliegenden Erfindung ist jedoch immer, dass zumindest ein Linearsensor verwendet ist.

Der Linearsensor kann als magnetoresistiver Sensor ausgebildet sein und insbesondere einen magnetisierten Ferritstab umfassen. Der Ferritstab kann dabei spiralenförmig magnetisiert sein und bei seiner Bewegung an einem Magnetfeld-Sensor vorbeigeführt werden. Eine solche Anordnung ist bereits in einem Schutzrecht der Firma Hoerbiger Hydraulik GmbH beschrieben. Überdies kann der Linearsensor nach dem Prinzip der variablen Induktivität arbeiten, dabei kann beispielsweise ein Ring auf einer Stange angeordnet sein, wobei der Ring bei Bewegung der Stange an einer Spule vorbeigeführt wird. Damit lässt sich ebenfalls die Lage der Stange auf einfache und kostengünstige Art ermitteln. Alternativ könnte auch innerhalb einer Spule ein leitfähiger Kolben derartige Rückwirkungen auf die Spule auslösen, dass aus der sich ändernden Signalspannung auf die Position des Kolbens geschlossen werden kann.

Besondere Ausgestaltungen der Erfindung werden nachfolgend mit Bezug auf die beiliegenden Zeichnungen näher erläutert. Die Zeichnungen zeigen in
- Fig. 1: eine schematische Abbildung eines Teil eines Gestänges eines Faltverdeckes,
- Fig. 2: einen Ausschnitt aus Fig. 1 mit einer ersten Ausführungsform der Erfindung in Form von Linearsensoren,
- Fig. 3: einen Ausschnitt aus Fig. 1 mit einer Alternative von vorgesehenen Positionssensoren
- Fig. 4: ein Ausführungsbeispiel wie die Fig. 2 und 3 mit einer dritten Kombination von Positionssensoren,
- Fig. 5: einen Ausschnitt wie in den Fig. 2 bis 4 mit einer vierten Kombination von Positionssensoren und
- Fig. 6: einen Ausschnitt wie in den Fig. 2 bis 5 mit einer fünften Kombination von Positionssensoren.

Im weiteren Verlauf der Beschreibung wird nicht näher auf die Linearsensoren selbst eingegangen. Diesbezüglich wird auf Veröffentlichungen der Firma Hoerbiger Hydraulik GmbH für magnetoresistive Linearsensoren sowie auf Ausführungsbeispiele der Firma Micro-Epsilon für Linearsensoren, die auf dem Prinzip der variablen Induktivität arbeiten, hingewiesen.

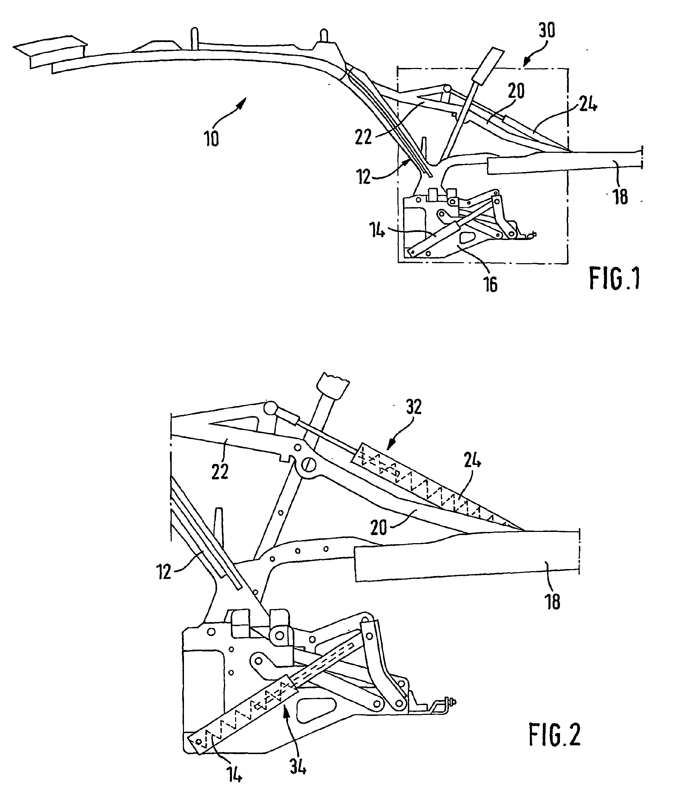

Die vorliegende Erfindung ist bei einem Faltverdeck eines Cabrio-Fahrzeugs angewendet, wobei in Fig. 1 ein Teil des Gestänges des Faltverdeckes dargestellt ist.

Nicht dargestellt wurde das Fahrzeug sowie für die Erfindung nicht wesentliche Teile des Faltverdeckes, wie der Verdeckstoff.

Herkömmlicherweise ist bei einem Cabrio-Fahrzeug das Faltverdeck in einem Verdeckkasten unterhalb einer Verdeckabdeckung einbringbar. Zum Öffnen eines geschlossenen Cabrio-Verdecks muss das Verdeck zunächst in seinem Kopfbereich entriegelt werden. Ein solcher Vorgang bzw. eine solche Vorrichtung ist beispielsweise aus der US 5,058,939 bekannt. Sodann wird herkömmlicherweise ein Spannbügel angehoben, so dass die Verdeckabdeckung geöffnet werden kann. Um das Verdeck frei bewegen zu können, werden zudem die Fenster des Fahrzeugs zumindest geringfügig abgesenkt. Nach dem vollständigen Öffnen der Verdeckabdeckung schwenkt der Spannbügel zurück und das Faltverdecks beginnt sich in den Verdeckkasten abzusenken. Zu diesem Zweck klappt das Gestänge im Hauptteil des Verdecks an mehreren Scharnierpunkten ein, so dass es insgesamt zu einer Faltung kommt, um so das Verdeck vollständig im Verdeckkasten abzulegen. Ist das Faltverdeck vollständig im Verdeckkasten eingebracht wird die Verdeckabdeckung geschlossen.

Beim Schließen des Verdecks wird in der entgegengesetzten Reihenfolge vorgegangen.

Wie bereits aus der US 5,225,747 bekannt, ist es für einen fehlerfreien Öffnungs- und Schließ-Vorgang notwendig, möglichst bei jedem Bewegungsschritt die Position der einzelnen Gestängeteile zu kennen. Insbesondere ist es wichtig, die Positionen von Spannbügel und Hauptsäule zu kennen. Zu diesem Zweck werden gemäß der vorliegenden Erfindung Linearsensoren eingesetzt.
Bei der Ausführungsform in Fig. 1, in der lediglich relevante Gestängeteile schematisch dargestellt sind, wird eine Hauptsäule 12 einer Gestängeeinheit 10 eines Faltverdecks von einem ersten Hydraulikzylinders 14 beaufschlagt, so dass es je nach Betrieb des Hydraulikzylinders 14 in einem Hauptlager verschwenkbar ist. Zusätzlich werden Spannstangen mittels eines zweiten Hydraulikzylinders 24 betätigt. Der zweite Hydraulikzylinder 24 ist an seinem einen Ende mit einer oberen Spannstange 22 verbunden, die wiederum eine Verbindung zwischen weiteren Gestängeteilen 12 und einer unteren Spannstange 20 herstellt. Die untere Spannstange 20 ist wiederum mit einem Spannbügel 18 verbunden. Der zweite Hydraulikzylinder 24 stützt sich mit seinem anderen Ende gegen den Spannbügel 18 direkt ab.

Um die oben genannte Betriebsweise beim Öffnen und Schließen des Faltverdeckes vornehmen zu können, werden die beiden Hydraulikzylinder 14 und 24 in einer genau vordefinierten Weise betätigt. Zum Anheben des Spannbügels 18, wird der erste Hydraulikzylinder 24 durch seinen Betrieb so verkürzt. Nach dem Entriegeln des Faltverdecks an seinem vorderen Ende und einem Öffnen der Verdeckabdeckung kann sodann durch nunmehriges Ausfahren des Hydraulikzylinders 24 der Spannbügel 18 in Richtung des offenen Verdeckkastens abgesenkt werden und durch weiteren Betrieb der Hydraulikzylinder 14 und 24 sodann das Faltverdeck beim fortwährenden Zurückfahren in den Verdeckkasten gefaltet und schließlich vollständig in den Faltverdeckkasten verfahren werden.

Um nun eine Fehlfunktion beim Öffnen oder Schließen detektieren zu können, sind die beiden Hydraulikzylinder 14 und 24 gemäß Fig. 2 integriert mit einem Linearsensor ausgebildet. Die Linearsensoren 32 und 34 sind dabei vorliegend lediglich schematisch dargestellt und zwar durch die Andeutung einer Spule (Zick-Zack-Linie) sowie eine dicke Linie, die einen magnetisierten Stab symbolisieren soll. Der Stab wird bei der Bewegen der jeweiligen Hydraulikzylinder 14 und 24 in der Spule verschoben. Durch diese Verschiebung des magnetisierten Ferritstabes innerhalb der Spule kann für jeden Hydraulikzylinder dessen Länge festgestellt werden. Insgesamt kann damit genau der Abstand zwischen den beiden Anlenkpunkten des Hydraulikzylinders ermittelt und somit die Positionen der einzelnen Verdeckelemente zueinander bestimmt werden. Bezüglich des Hydraulikzylinders 24 ist es somit möglich, die Position des Spannbügels 18 im Verhältnis zur oberen Spannstange zu ermitteln. Bezüglich des Hydraulikzylinders 14 ist es möglich, die Stellung der Hauptsäule bezüglich eines fahrzeugfesten Elements zu bestimmen.

Die beiden Linearsensoren geben jeweils ein entsprechendes Signal an eine vorliegend nicht dargestellte Steuerung ab. Diese Steuerung schließt aufgrund der verschiedenen Signalinformationen sowie der Betriebssituation des Faltverdeckes auf eine Funktionsstörung oder bestätigt eine ordnungsgemäße Funktionsweise. Sollte eine Fehlfunktion festgestellt werden, so kann der Bewegungsablauf gestoppt und der Fahrer informiert bzw. vom Steuergerät eine Korrektur des Ablaufs vorgenommen werden.

Durch die Verwendung eines Linearsensors kann der Sensor in vorteilhafter Weise mit dem Antriebssystem gekoppelt werden. Günstig wirkt sich in diesem Fall aus, dass die Leitungsführung von den im Antriebsbereich angeordneten Sensoren einfacher gestaltet werden kann, als in anderen Teilen des Faltverdecks.

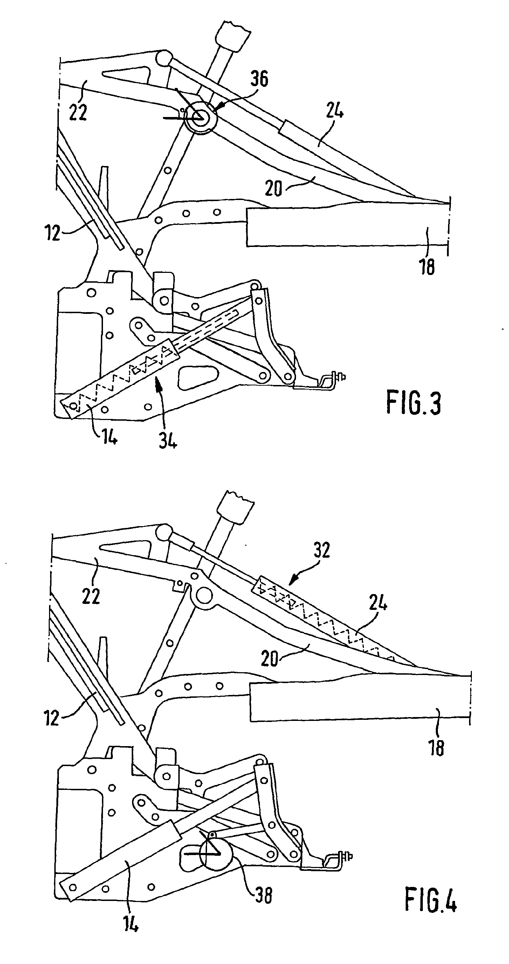

Die Ausführungsform gemäß Fig. 3 unterscheidet sich von derjenigen in Fig. 2 lediglich dadurch, dass nunmehr der Linearsensor 32 durch einen Drehwinkelsensor 36 im Scharnierbereich zwischen der oberen und der unteren Spannstange ersetzt worden ist.

In Fig. 4 wurde gegenüber der Ausführungsform in Fig. 2 der Linearsensor 34 durch einen Drehwinkelsensor 38 ersetzt.

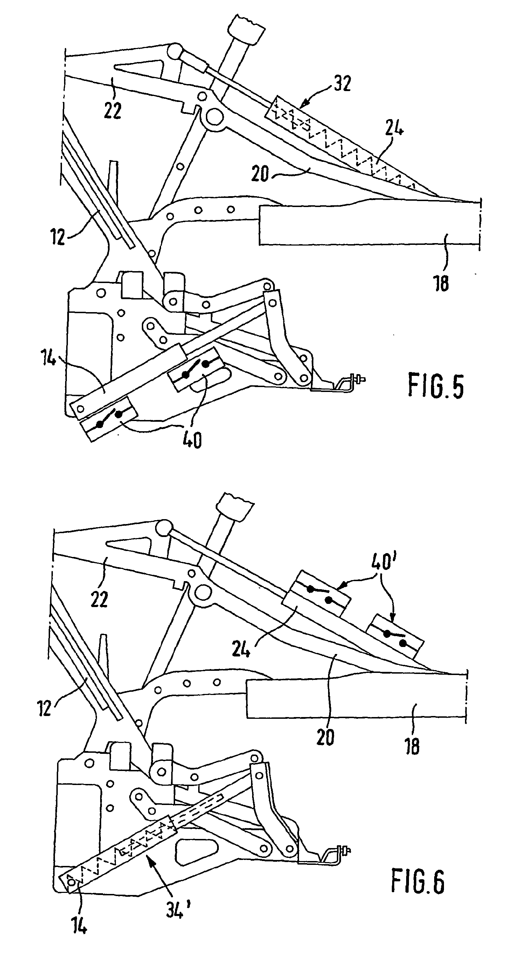

In Fig. 5 wurde der Linearsensor 34 in Fig. 2 durch zwei Endlagenschalter 40 ersetzt, die dann geschlossen sind, wenn sich der Hydraulikzylinder in seiner vollständig ausgefahrenen bzw. vollständig eingefahrenen Stellung befindet. In allen Fällen, in denen ein Linearsensor durch einen Drehwinkelsensor oder einen Schalter ersetzt wurde, wird die entsprechende Signalleitung in analoger Weise zu einem Steuergerät geführt und ausgewertet.

In Fig. 6 ist eine Ausführungsform dargestellt, in der gegenüber der Ausführungsform in Fig. 5 die zwei Endlagenschalter 40' einerseits und der Linearsensor 34' prinzipiell gegeneinander vertauscht worden sind.

## Patentansprüche

1. System zum Öffnen und Schließen eines Faltverdeckes oder beweglichen Fahrzeugdachs bei einem Cabrio-Fahrzeug,
- mit zumindest einem Antriebsmittel, um das Faltverdeck oder bewegliche Fahrzeugdach zu öffnen und zu schließen,
- mit zumindest einem Positionssensor, der die Position eines Elements des Faltverdeckes oder beweglichen Fahrzeugdachs zumindest über einen Teilbereich seines Bewegungsweges kontinuierlich erfasst und
- mit einer Steuereinrichtung, die ein Signal von dem zumindest einen Positionssensor erhält und ein Signal zum Ansteuern des zumindest einen Antriebsmittels unter Berücksichtigung des zumindest einen Positionssensorsignals erzeugt,
**dadurch gekennzeichnet,**
**dass** der zumindest eine Positionssensor als Linearsensor ausgebildet ist, der derart angeordnet ist, dass die Position zweier beweglicher Elemente des Faltverdeckes oder beweglichen Fahrzeugdachs zueinander oder die Position eines beweglichen Elements des Faltverdeckes oder beweglichen Fahrzeugdachs zu einem festen Bezugspunkt des Fahrzeugs erfassbar ist.

2. System nach Anspruch 1,
**dadurch gekennzeichnet,**
**dass** der zumindest eine Positionssensor mit dem zumindest einen Antriebsmittel gekoppelt, insbesondere mit diesem integriert ausgebildet ist.

3. System nach Anspruch 1 oder 2,
**dadurch gekennzeichnet,**
**dass** das zumindest eine Antriebsmittel einen Kolben aufweist.

4. System nach Anspruch 3,
**dadurch gekennzeichnet,**
**dass** die Antriebsmittel hydraulisch oder pneumatisch betrieben wird.

5. System nach einem der Ansprüche 1 oder 2,
**dadurch gekennzeichnet,**
**dass** als Antriebsmittel ein Elektromotor vorgesehen ist.

6. System nach einem der vorhergehenden Ansprüche,
**dadurch gekennzeichnet,**
**dass** der Linearsensor derart angeordnet ist, dass die Relativlage der Position einer Hauptsäule des Faltverdeckes oder beweglichen Fahrzeugdachs zu einem festen Bezugspunkt des Fahrzeugs ermittelbar ist.

7. System nach einem der vorhergehenden Ansprüche,
**dadurch gekennzeichnet,**
**dass** der Linearsensor derart angeordnet ist, dass die Lage der Position eines Spannbügels des Faltverdeckes oder beweglichen Fahrzeugdachs zu einem anderen Bezugspunkt des Faltverdeckes oder beweglichen Fahrzeugdachs ermittelbar ist.

8. System nach einem der vorhergehenden Ansprüche,
**dadurch gekennzeichnet,**
**dass** zusätzlich zu dem zumindest einen Linearsensor ein Drehwinkelsensor vorgesehen ist, der die Relativlage zweier beweglicher Elemente des Faltverdeckes oder beweglichen Fahrzeugdachs zueinander oder die absolute Lage eines beweglichen Elementes des Faltverdeckes oder beweglichen Fahrzeugdachs zum einem festen Element des Fahrzeugs zumindest über einen Teil des Bewegungsbereiches ermittelt und an die Steuereinrichtung abgibt.

9. System nach einem der vorhergehenden Ansprüche,
**dadurch gekennzeichnet,**
**dass** zusätzlich zu dem zumindest einen Linearsensor zumindest ein Schalter vorgesehen ist, der dann ein Signal an die Steuereinrichtung abgibt, wenn ein ihm zugeordnetes Element des Faltverdeckes oder beweglichen Fahrzeugdachs während des Öffnens und/oder Schließens eine bestimmte Position erreicht hat.

10. System nach einem der vorhergehenden Ansprüche,
**dadurch gekennzeichnet,**
**dass** der Linearsensor als magnetoresistiver Sensor ausgebildet ist.

11. System nach Anspruch 10,
**dadurch gekennzeichnet,**
**dass** der magnetoresistive Sensor einen magnetisierten Ferritstab umfasst, der an einem Magnetfeld-Sensor vorbeigeführt ist.

12. System nach einem der Ansprüche 1 bis 9,
**dadurch gekennzeichnet,**
**dass** der Linearsensor nach dem Prinzip der variablen Induktivität arbeitet.

13. System nach Anspruch 12,
**dadurch gekennzeichnet,**
**dass** der Linearsensor einen Ring umfasst, der parallel zur Achse einer Spule an der Spule vorbeiführbar ist.

14. System nach Anspruch 13,
**dadurch gekennzeichnet,**
**dass** der Ring aus Aluminium oder Kupfer besteht.

15. System nach Anspruch 12,
**dadurch gekennzeichnet,**
**dass** ein leitfähiger Kolben durch eine Spule geführt ist.

## Claims

1. A system for opening and closing a folding top or movable vehicle roof in a convertible vehicle, comprising:
- at least one drive means for opening and closing the folding top or movable vehicle roof,
- at least one position sensor, which continuously detects the position of an element of the folding top or movable vehicle roof at least over a part region of its movement path, and
- a control device, which receives a signal from the at least one position sensor and produces a signal to activate the at least one drive means taking into account the at least one position sensor signal,
**characterised in that**
the at least one position sensor is configured as a linear sensor, which is arranged in such a way that the position of two movable elements of the folding top or movable vehicle roof with respect to one another or the position of a movable element of the folding top or movable vehicle roof with respect to a fixed reference point of the vehicle can be detected.

2. A system according to claim 1, **characterised in that** the at least one position sensor is coupled to the at least one drive means, more especially is integrated therewith.

3. A system according to claim 1 or 2, **characterised in that** the at least one drive means has a piston.

4. A system according to claim 3, **characterised in that** the drive means is operated hydraulically or pneumatically.

5. A system according to either of claims 1 or 2, **characterised in that** an electric motor is provided as the drive means.

6. A system according to any one of the preceding claims, **characterised in that** the linear sensor is arranged in such a way that the relative location of the position of a main column of the folding top or movable vehicle roof with respect to a fixed reference point of the vehicle can be determined.

7. A system according to any one of the preceding claims, **characterised in that** the linear sensor is arranged in such a way that the location of the position of a tension bracket of the folding top or movable vehicle roof with respect to another reference point of the folding top or movable vehicle roof can be determined.

8. A system according to any one of the preceding claims, **characterised in that** in addition to the at least one linear sensor, an angle of rotation sensor is provided, which determines the relative location of two movable elements of the folding top or movable vehicle roof with respect to one another or the absolute position of a movable element of the folding top or movable vehicle roof with respect to a fixed element of the vehicle at least over a part of the movement range and emits it to the control device.

9. A system according to any one of the preceding claims, **characterised in that** in addition to the at least one linear sensor, at least one switch is provided, which emits a signal to the control device if an element of the folding top or movable vehicle roof associated with it has reached a specific position during opening and/or closing.

10. A system according to any one of the preceding claims, **characterised in that** the linear sensor is configured as a magneto-resistive sensor.

11. A system according to claim 10, **characterised in that** the magneto-resistive sensor comprises a magnetised ferrite rod, which is guided past a magnetic field sensor.

12. A system according to any one of claims 1 to 9, **characterised in that** the linear sensor operates according to the principle of variable inductivity.

13. A system according to claim 12, **characterised in that** the linear sensor comprises a ring, which can be guided past the coil parallel to the axis of a coil.

14. A system according to claim 13, **characterised in that** the ring comprises aluminium or copper.

15. A system according to claim 12, **characterised in that** a conductive piston is guided through a coil.

## Revendications

1. Système pour ouvrir et fermer une capote repliable ou un toit mobile d'un véhicule cabriolet comprenant :
- au moins un moyen d'entraînement pour ouvrir et fermer la capote repliable ou le toit mobile,
- au moins un capteur de position détectant en continu la position d'un élément de la capote repliable ou du toit mobile, au moins sur une zone partielle de sa trajectoire, et
- une installation de commande qui reçoit un signal d'au moins un capteur de position et génère un signal pour commander au moins un moyen d'entraînement en tenant compte d'au moins un signal de capteur de position,
**caractérisé en ce qu'**
au moins le capteur de position est réalisé sous forme de capteur linéaire installé de manière à détecter la position de deux éléments mobiles l'un par rapport à l'autre de la capote repliable ou du toit mobile ou la position d'un élément mobile de la capote repliable ou du toit mobile par rapport à un point de référence, fixe, du véhicule.

2. Système selon la revendication 1,
**caractérisé en ce qu'**
au moins un capteur de position est couplé à au moins un moyen d'entraînement, et notamment il est intégré à celui-ci.

3. Système selon la revendication 1 ou 2,
**caractérisé en ce qu'**
au moins un moyen d'entraînement comporte un piston.

4. Système selon la revendication 3,
**caractérisé en ce que**
les moyens d'entraînement sont des moyens hydrauliques ou pneumatiques.

5. Système selon la revendication 1 ou 2,
**caractérisé en ce que**
le moyen d'entraînement est un moteur électrique.

6. Système selon les revendications précédentes,
**caractérisé en ce que**
le capteur linéaire est installé pour déterminer la position relative d'une potence principale de la capote repliable ou du toit mobile par rapport à un point de référence fixe du véhicule.

7. Système selon les revendications précédentes,
**caractérisé en ce que**
le capteur linéaire est installé pour déterminer la position d'un arceau de la capote repliable ou du toit mobile par rapport à un autre point de référence de la capote repliable ou du toit mobile.

8. Système selon les revendications précédentes,
**caractérisé en ce qu'**
en plus d'au moins un capteur linéaire, il est prévu un capteur d'angle de rotation qui indique la position relative de deux éléments mobiles de la capote repliable ou du toit mobile du véhicule, l'un par rapport à l'autre ou la position absolue d'un élément mobile de la capote repliable ou du toit mobile par rapport à un point fixe du véhicule au moins sur une partie de la plage de déplacement et fournit l'information à l'installation de commande.

9. Système selon les revendications précédentes,
**caractérisé en ce qu'**
en plus d'au moins un capteur linéaire, il est prévu au moins un commutateur générant un signal pour l'installation de commande si l'élément de la capote repliable ou du toit mobile qui lui est associé, atteint une certaine position au cours de l'ouverture et/ou de la fermeture.

10. Système selon les revendications précédentes,
**caractérisé en ce que**
le capteur linéaire est un capteur magnétorésistant.

11. Système selon la revendication 10,
**caractérisé en ce que**
le capteur magnétorésistant comprend un barreau de ferrite aimanté qui passe devant un capteur de champ magnétique.

12. Système selon les revendications 1 à 9,
**caractérisé en ce que**
le capteur linéaire fonctionne selon le principe de l'inductance variable.

13. Système selon la revendication 12,
**caractérisé en ce que**
le capteur linéaire comporte un anneau qui passe devant la bobine parallèlement à l'axe de la bobine.

14. Système selon la revendication 13,
**caractérisé en ce que**
l'anneau est en aluminium ou en cuivre.

15. Système selon la revendication 12,
**caractérisé en ce qu'**
un piston conducteur est conduit à travers une bobine.
